# EUROPÄISCHE PATENTSCHRIFT

(11) **EP 2 676 063 B1**
(45) Veröffentlichungstag und Bekanntmachung des Hinweises auf die Patenterteilung: **10.12.2014**
(21) Anmeldenummer: 11706462.6
(22) Anmeldetag: 15.02.2011
(51) Int. Cl.: F16L 55/115

(54) **VENTIL FÜR FLÜSSIQKEITSBEHÄLTER**
VALVE FOR LIQUID CONTAINER
VALVE POUR RECIPIENT DE FLUIDES

(43) Veröffentlichungstag der Anmeldung: 25.12.2013
(73) Patentinhaber: CWS-Boco Supply AG, 6340 Baar (CH)
(72) Erfinder: ZÜND, Marco, CH-9436 Balgach (CH); SCHEIWILLER, Felix, CH-9444 Diepoldsau (CH); ERB, Markus, CH-6030 Ebikon (CH)
(74) Vertreter: Lusuardi, Werther
(86) Internationale Anmeldenummer: PCT/CH2011/000029
(87) Internationale Veröffentlichungsnummer: WO 2012/109763

(56) Entgegenhaltungen:
- EP-A1- 0 998 644
- US-A- 3 806 086
- US-A1- 2003 066 978
- US-A1- 2005 127 114

## Beschreibung

Die Erfindung bezieht sich auf ein Ventil zum Öffnen und Verschliessen eines Flüssigkeitsbehälters oder -beutels gemäss dem Oberbegriff des Patentanspruchs 1. Die US2005/0127114 offenbart ein solches Ventil.

Aus der EP 0 998 644 LAST ist ein Behälterventil bekannt, das durch Einführen eines Pumpenstutzens in die zentrale Ventilöffnung geöffnet und wieder geschlossen werden kann. Die Verschlusskappe sitzt im geschlossenen Zustand des Ventils in der zentralen Ventilöffnung und wird mittels einer peripher umlaufenden Lippe, die an einer durch eine Erweiterung der Ventilöffnung gebildeten Schulterfläche anliegt, am Ventilkörper festgehalten. Beim Öffnen des Ventils wird die umlaufende Lippe an der Verschlusskappe gegen die Längsachse der Ventilöffnung nach innen gepresst und die Verschlusskappe aus der Ventilöffnung ausgeschoben. Beim Schliessen des Ventils wird die am Pumpenstutzen lösbar befestigte Verschlusskappe wieder soweit in die Ventilöffnung eingezogen, bis die umlaufende Lippe wieder in die Erweiterung in der Ventilöffnung einschnappt und an der Schulterfläche anliegt. Die Verschlusskappe ist dann am Ventilkörper befestigt und verschliesst die Ventilöffnung, so dass keine Flüssigkeit aus dem Behälter ausfliessen kann.

Nachteilig an dieser bekannten Vorrichtung ist, dass beim Schliessen des Ventils die Ventilkappe durch unsachgemässe Manipulation vom Pumpenstutzen weggerissen werden kann bevor der in die Ventilöffnung einzuführende und die umlaufende Lippe enthaltende Teil der Verschlusskappe in die Ventilöffnung eingezogen wird, beispielsweise dadurch, dass der gegen den Ventilkörper gerichtete Rand der Verschlusskappe am Ventilkörper ansteht.

Hier will die Erfindung Abhilfe schaffen. Der Erfindung liegt die Aufgabe zugrunde, ein Behälterventil zu schaffen, dessen Verschlusselement selbsttätig in eine die Ventilöffnung abdichtende Position gebracht wird und durch eine ständig wirkende Anpresskraft in dieser geschlossenen Position gehalten wird.

Die Erfindung löst die gestellte Aufgabe mit einem Ventil, welches die Merkmale des Anspruchs 1 aufweist, sowie mit einem Flüssigkeitsbehälter, welcher die Merkmale des Anspruchs 13 aufweist.

Die durch die Erfindung erreichten Vorteile sind im wesentlichen darin zu sehen, dass:
- das Verschlusselement anfänglich in eine erste Position in die Durchgangsöffnung eingepresst werden kann, so dass beide Dichtlippen in die Durchgangsöffnung eingepresst sind und ein am Ventil befestigter Flüssigkeitsbehälter flüssigkeitsdicht und fest verschlossen werden kann. Nach dem Entfernen des Flüssigkeitsbehälters von der Pumpeneinheit wird das Verschlusselement mittels Federkraft selbsttätig in eine zweite Position gedrückt, in welcher nur die erste Dichtlippe in die Durchgangsöffnung eingepresst wird während die zweite Dichtlippe wegen der stärkeren Presspassung am Rand der Durchgangsöffnung aufliegt. Der Flüssigkeitsbehälter wird somit abgedichtet, ohne dass das Verschlusselement wieder vollständig in die Durchgangsöffnung eingepresst werden muss;
- das Ventil ohne grossen Kraftaufwand von einem Pumpenstutzen entfernbar ist, da der Kopf des Pumpenstutzens leicht vom Verschlusselement entfernbar ist und das Ventil mittels Federkraft geschlossen wird; und
- das Ventil beim Befestigen und Entfernen des Flüssigkeitsbehälters an und von der Pumpeneinheit weniger verletzungsanfällig ist, da das Verschlusselement durch das Federelement in die Durchgangsöffnung gedrückt wird und keine formschlüssig ineinander eingreifenden Teile durch elastisches Deformieren aus dem Eingriff gebracht werden müssen.

Weitere vorteilhafte Ausgestaltungen der Erfindung können wie folgt kommentiert werden:

In einer speziellen Ausführungsform umfasst der Ventilkörper ein Federhalteteil, welches über die Unterseite hinausragt und eine der Durchgangsöffnung gegenüberliegend angeordnete Halterung für das Federelement aufweist. Vorzugsweise ist das Federelement als Druckfeder ausgebildet.

In einer anderen Ausführungsform ist das Federelement zwischen der Halterung am Federhalteteil und dem Verschlusselement angeordnet, so dass das Verschlusselement von der Unterseite her in die Durchgangsöffnung des Ventilkörpers gedrückt wird.

In einer anderen Ausführungsform ist das Federhalteteil im Wesentlichen U-förmig ausgebildet und umfasst zwei fest mit dem Ventilkörper verbundene Seitenarme und ein fest mit den Seitenarmen verbundenes stegförmiges Brückenteil. Durch diese Ausgestaltung des Ventilkörpers kann das Federhalteteil einstückig mit dem Ventilkörper ausgebildet werden.

In wiederum einer anderen Ausführungsform wird das Verschlusselement mittels einem oder mehreren mit dem Federhalteteil oder mit dem Ventilkörper verbundenen elastischen Armen gehalten. Diese Ausgestaltung ermöglicht, dass das Verschlusselement nicht verloren gehen kann. Zudem können der Ventilkörper, das Federhalteteil, das Verschlusselement und die elastischen Arme einstückig hergestellt werden.

In einer weiteren Ausführungsform sind der Ventilkörper, das Federhalteteil und das Verschlusselement und vorzugsweise die elastischen Arme einstückig hergestellt. Dadurch ist der Vorteil erreichbar, dass der Ventilkörper, das Federhalteteil, das Verschlusselement und die elastischen Arme als Spritzgussteil beispielsweise aus Polypropylen (PP) hergestellt sein können.

In wiederum einer weiteren Ausführungsform ist die Halterung für das Federelement als Hohlraum ausgebildet, welcher das Brückenteil koaxial zur Zentralachse des Ventilkörpers durchdringt und Mittel zum axialen Halten des Federelementes umfasst. Das Federelement kann somit von aussen eingeführt werden und nachher im Hohlraum gehalten und geführt werden. Als Mittel zum Halten des Federelementes können beispielsweise am endständigen Ende des Hohlraums in den Hohlraum hineinragende Nasen angeordnet sein, welche als axiale Abstützung für das Federelement dienen.

In einer anderen Ausführungsform hat das Brückenteil eine endständige Aussenfläche, wobei auf dieser Aussenfläche mindestens zwei zur Zentralachse im Wesentlichen parallele Fortsätze angeordnet sind, durch die sich der Hohlraum erstreckt. Der Vorteil dieser Ausführungsform liegt im Wesentlichen darin, dass der Hohlraum zur besseren Führung des Federelementes verlängert wird.

In einer weiteren Ausführungsform ist der Ventilkörper als Hohlzylinder ausgebildet und umfasst vorzugsweise eine oder mehrere im Wesentlichen rautenförmige Lamellen, welche sich quer zur Zentralachse des Ventilkörpers erstrecken. Dadurch wird ermöglicht, dass der Ventilkörper in rigider Weise an einem Beutel verschweisst werden kann.

In wiederum einer weiteren Ausführungsform ist zwischen den Lamellen eine erste Verstärkungsrippe und vorzugsweise aussen am Federhalteteil eine zweite Verstärkungsrippe angeordnet, so dass sich eine rigide Bauweise des Ventilkörpers ergibt.

Vorzugsweise ist das Federelement ein separates Teil.

In einer speziellen Ausführungsform des Flüssigkeitsbehälters ist der Beutel am Rand verschweissbar und der Ventilkörper in den verschweissbaren Rand eines Beutels eingeschweisst. Dabei ist der Rand des Beutels bis auf einen Randabschnitt verschweisst, so dass zum Abfüllen des Beutels eine Öffnung im Beutel gebildet wird.

Die Erfindung und Weiterbildungen der Erfindung werden im Folgenden anhand der teilweise schematischen Darstellungen eines Ausführungsbeispiels noch näher erläutert.

Es zeigen:
Fig. 1 einen Längsschnitt durch eine Ausführungsform des erfindungsgemässen Ventils;
Fig. 2 eine Ansicht der in Fig. 1 dargestellten Ausführungsform des erfindungsgemässen Ventils im geschlossenen Zustand und eingeschweisst in einen Flüssigkeitsbeutel;
Fig. 3 einen Querschnitt durch die in Fig. 1 dargestellte Ausführungsform des erfindungsgemässen Ventils entlang der Linie D - D in Fig. 2;
Fig. 4 einen Querschnitt durch die in Fig. 1 dargestellte Ausführungsform des erfindungsgemässen Ventils entlang der Linie C - C in Fig. 2;
Fig. 5 ein Längsschnitt der in Fig. 1 dargestellten Ausführungsform des erfindungsgemässen Ventils zusammen mit einem Pumpenstutzen und eine vergrösserte Schnittdarstellung des Details A in Fig. 1 bei geschlossenem Ventil;
Fig. 6 eine vergrösserte Schnittdarstellung des Details A in Fig. 1 bei vollständig geöffnetem Ventil; und
Fig. 7 eine vergrösserte Schnittdarstellung des Details A in Fig. 1 mit dem Verschlusselement in der zweiten Position.

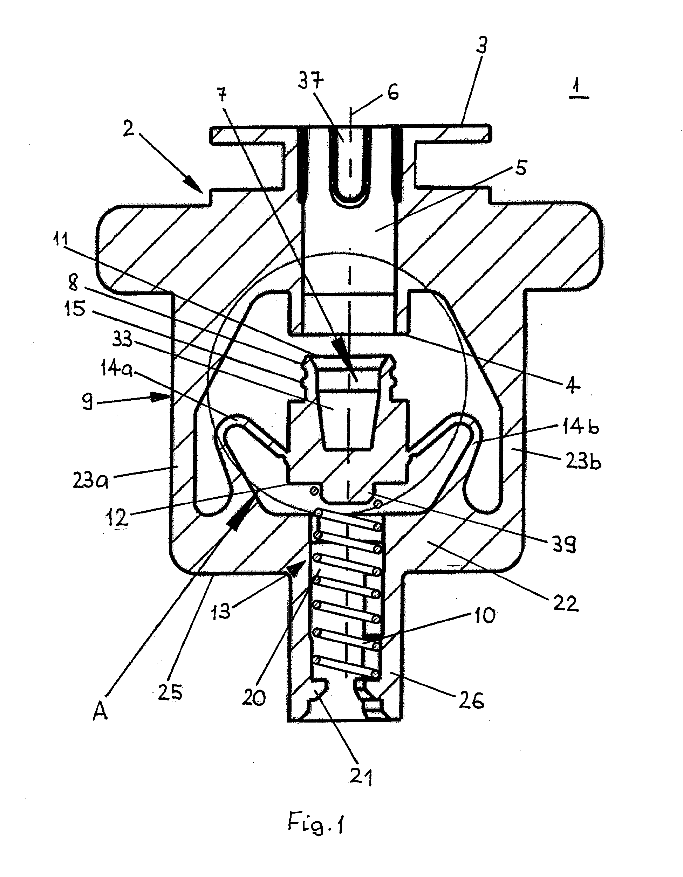

Die in Fig. 1 dargestellte Ausführungsform des Ventils 1umfasst im Wesentlichen einen Ventilkörper 2 mit einer Durchgangsöffnung 5, ein in die Durchgangsöffnung 5 einpressbares Verschlusselement 7 und ein Federelement 10, welches das Verschlusselement 7 in die Durchgangsöffnung 5 drückt.

Der Ventilkörper 2 hat eine Zentralachse 6, eine quer zur Zentralachse 6 angeordnete Oberseite 3, eine ebenfalls quer zur Zentralachse 6 angeordnete Unterseite 4 und eine den Ventilkörper 2 koaxial von der Oberseite 3 zur Unterseite 4 durchdringende Durchgangsöffnung 5. Ferner umfasst der Ventilkörper 2 ein Federhalteteil 9, das im Wesentlichen U-förmig ausgebildet ist und über die Unterseite 4 hinausragt. Das Federhalteteil 9 hat zwei Seitenarme 23a;23b, deren erste Enden an der Unterseite 4 fest mit dem Ventilkörper 2 verbunden sind und deren zweite Enden fest mit einem stegförmigen Brückenteil 22 verbunden sind. Das Federhalteteil 9 hat eine geringere Breite als der Ventilkörper 2, so dass bei geöffnetem Ventil 1 Flüssigkeit durch den Freiraum zwischen den Seitenarmen 23a;23b und zwischen dem Brückenteil 22 und der Unterseite 4 des Ventilkörpers 2 in die Durchgangsöffnung 5 fliessen kann.

Das Brückenteil 22 umfasst eine der Durchgangsöffnung 5 gegenüberliegend angeordnete Halterung 13 für das Federelement 10. Die Halterung 13 für das Federelement 10 ist als Hohlraum 20 ausgebildet, welcher das Brückenteil 22 koaxial zur Zentralachse 6 des Ventilkörpers 2 durchdringt. Auf der endständigen Aussenfläche 25 des Brückenteils 22 sind zwei zur Zentralachse 6 im Wesentlichen parallele Fortsätze 26 angeordnet, so dass der Hohlraum 20 zur besseren Führung des Federelementes 10 verlängert wird. Am endständigen Ende der Fortsätze 26 ist je eine in den Hohlraum 20 hineinragende Nase 21 angeordnet, welche als axiale Abstützung für das Federelement 10 dient. Die Oberseite 3 und die Unterseite 4 im Bereich der Durchgangsöffnung 5 des Ventilkörpers 2 sind planar ausgebildet.

Das Verschlusselement 7 hat ein vorderes Ende 11 und ein hinteres Ende 12 und ist mit dem vorderen Ende 11 voraus von der Unterseite 4 des Ventilkörpers 2 her in die Durchgangsöffnung 5 einführbar. Das Verschlusselement 7 ist im Wesentlichen kreiszylinderförmig ausgebildet und umfasst gegen das vordere Ende 11 gerichtet einen ersten axialen Abschnitt, welcher in die Durchgangsöffnung 5 einführbar ist, und gegen das hintere Ende 12 gerichtet einen eine grössere Querschnittsfläche aufweisenden zweiten axialen Abschnitt, welcher an der Unterseite 4 des Ventilkörpers 2 zur Anlage bringbar ist. Am hinteren Ende 12 des Verschlusselementes 7 ist eine Federaufnahme 39 angeordnet, welche als zapfenförmiger Fortsatz ausgebildet ist. Am vorderen Ende 11 des Verschlusselementes 7 ist auf dem ersten axialen Abschnitt des Verschlusselementes 7 eine erste peripher umlaufende Dichtlippe 8 angeordnet. Eine zweite peripher umlaufende Dichtlippe 15 ist von der ersten Dichtlippe 8 gegen das hintere Ende 12 des Verschlusselementes 7 beabstandet auf dem ersten axialen Abschnitt angeordnet. Die erste Dichtlippe 8 ist mit einer leichten Presspassung P1 in die Durchgangsöffnung 5 einpressbar während die zweite Dichtlippe 15 mit einer stärkeren Presspassung P2 in die Durchgangsöffnung 5 einpressbar ist. Das Verschlusselement 7 ist durch zwei elastische Arme 14a;14b bewegbar am Ventilkörper 2 befestigt. Die beiden elastischen Arme 14a;14b sind im Wesentlichen C-förmig ausgebildet, so dass das Verschlusselement 7 koaxial zur Zentralachse 6 des Ventilkörpers 2 in beide Richtungen verschiebbar ist. Die beiden elastischen Arme 14a;14b sind bezüglich der Zentralachse 6 des Ventilkörpers 2 einander gegenüberliegend angeordnet. Je ein erstes Ende der elastischen Arme 14a;14b ist mit dem Brückenteil 22 des Federhalteteils 9 verbunden während die zweiten Enden der elastischen Arme 14a;14b seitlich mit dem Verschlusselement 7 verbunden sind.

In einer alternativen Ausführungsform des Ventils 1 können die ersten Enden der elastischen Arme 14a;14b mit dem Ventilkörper 2 oder mit den Seitenarmen 23a;23b verbunden sein.

Der Ventilkörper 2 einschliesslich des Federhalteteils 9, der beiden elastischen Arme 14a;14b und des Verschlusselements 7 sind einstückig ausgebildet und können als Spritzgussteil und beispielsweise aus Polypropylen (PP) hergestellt sein.

Das Federelement 10 ist als Schraubenfeder ausgebildet. Ein erster Abschnitt des Federelements 10 ist in den Hohlraum 20 in der Halterung 13 am Federhalteteil 9 eingeführt während ein zweiter Abschnitt des Federelements 10 über die Federaufnahme 39 am hinteren Ende 12 des Verschlusselements 7 geschoben ist, so dass das Federelement 10 an beiden Enden axial gehalten wird und am ersten und zweiten Abschnitt auch seitlich geführt ist. Durch das Federelement 10 wird das Verschlusselement 7 gegen die Unterseite 4 des Ventilkörpers 2 gedrückt.

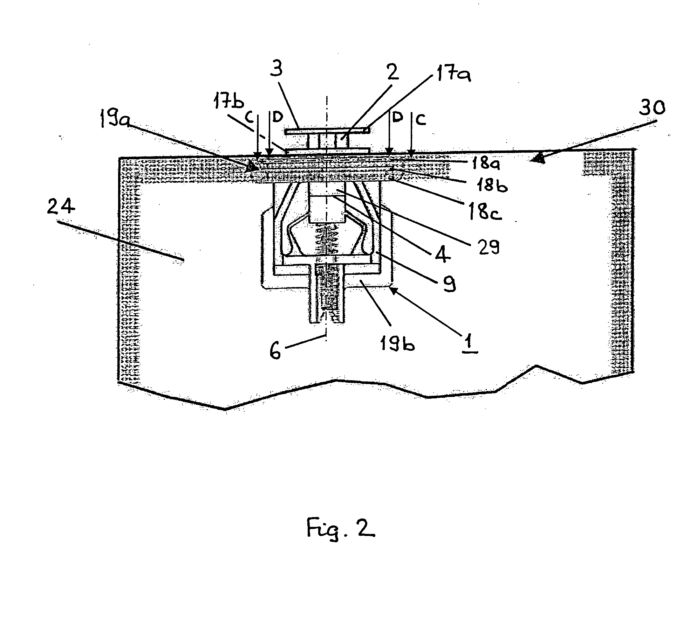

Wie in den Figuren 2 bis 4 ersichtlich ist der Ventilkörper 2 im Wesentlichen als Hohlzylinder 29 ausgebildet und umfasst drei quer zur Zentralachse 6 angeordnete rautenförmige Lamellen 18a;18b;18c, welche entlang der Zentralachse 6 voneinander beabstandet auf dem Hohlzylinder 29 angeordnet sind. Der Ventilkörper 2 umfasst ferner einen an der Oberseite 3 endständig angeordneten ersten Flansch 17a und dazu gegen die Unterseite 4 beabstandet einen zweiten Flansch 17b.

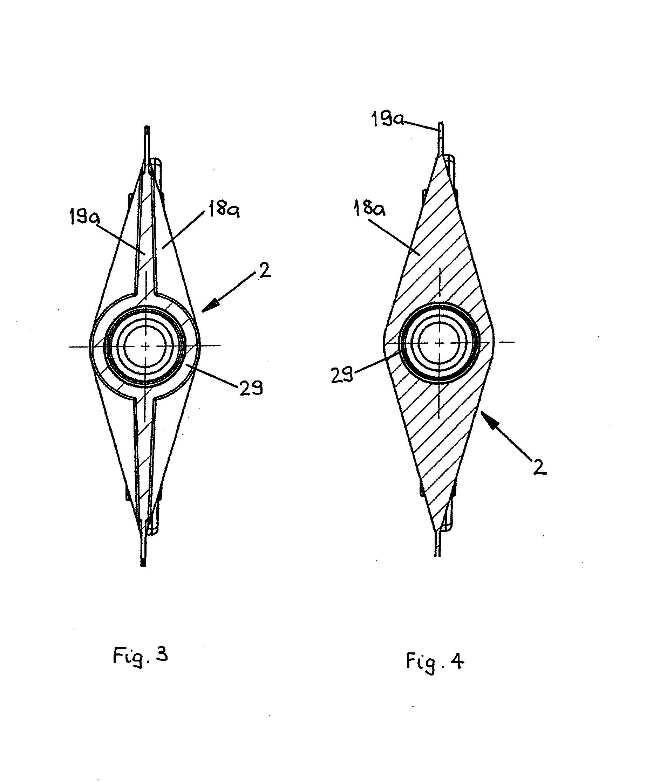

Ferner ist zwischen den Lamellen 18a;18b;18c und dem zweiten Flansch 17b eine Verstärkungsrippe 19 angeordnet, welche seitlich über die Lamellen 18a;18b;18c hinausragt (Fig. 3). Zusätzlich kann eine weitere Verstärkungsrippe 19d aussen am Federhalteteil 9 angeordnet sein (Fig. 2).

Das Federelement 10 wird von den freien Ende der Fortsätze 26 her in den Hohlraum 20 eingeführt und eingedrückt bis das hintere Ende des Federelementes 10 so weit in den Hohlraum 20 eingeführt ist, dass die Nasen 21 an den Fortsätzen 26 hinter dem Federelement 10 einschnappen und somit das Federelement 10 im Hohlraum 20 halten. Mit dem Eindrücken des Federelements 10 wird auch das Verschlusselement 7 in die Durchgangsöffnung 5 gepresst und das Ventil 1 geschlossen.

Wie in Fig. 2 dargestellt, wird der geschlossene Ventilkörper 2 in den verschweissbaren Rand eines Beutels 24 eingeschweisst, so dass die an der Oberseite 3 des Ventilkörpers 2 angeordneten Flansche 17a;17b ausserhalb des Beutels 24 zu liegen kommen. Der Beutel 24 wird am Rand bis auf einen Randabschnitt 30 verschweisst. Beim Abfüllen des Beutels 24 wird die Flüssigkeit nicht über das Ventil 1, sondern durch den unverschweissten Randabschnitt 30 eingefüllt. Anschliessend wird dieser Randabschnitt 30 noch verschweisst. Das Ventil 1 bleibt somit bis zum Endbenützer verschlossen.

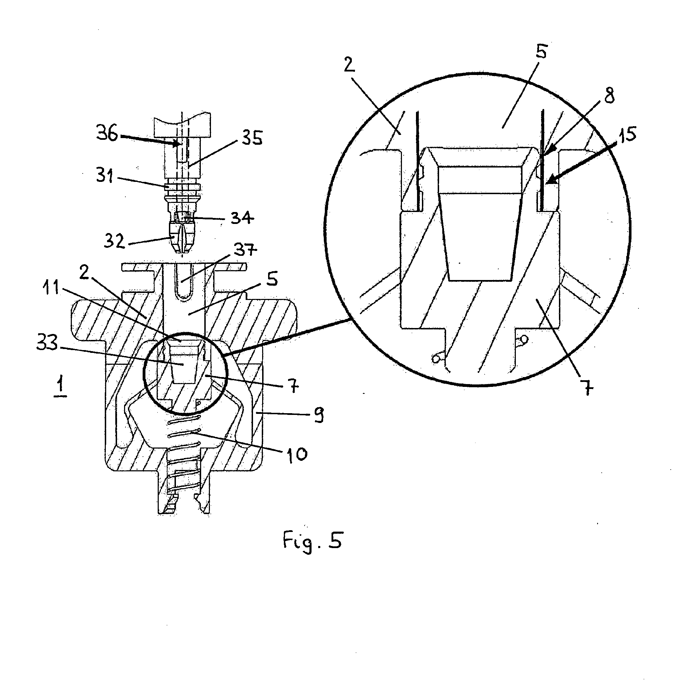

In den Fig. 5 bis 7 wird die Funktion des Ventils 1 anhand eines Beispiels dargestellt. Das Ventil 1 dient als Schnittstelle zwischen dem mit Flüssigkeit gefüllten Beutel 24 und dem Pumpenstutzen 31 (Fig. 5) einer Pumpeneinheit. Durch die stärkere Presspassung P2 der zweiten Dichtlippe 15 an dem Verschlusselement 7 ist der Beutel 24 anfänglich fest verschlossen. Der Beutel 24 kann aufgrund der in die Nuten 37 in der Durchgangsöffnung 5 eingreifenden Erhebungen 36 am Pumpenstutzen 31 nur in der vorgegebenen Position auf den Pumpenstutzen 31 geschoben werden. Durch das Aufstecken des Ventils 1 auf den Pumpenstutzen 31 wird das Ventil 1 geöffnet. Dabei wird zuerst der Kopf 32 des Pumpenstutzens 31 durch die Durchgangsöffnung 5 in ein am vorderen Ende 11 des Verschlusselementes 7 offenes Sackloch 33 eingeführt. Das Ventil 1 wird soweit auf den Pumpenstutzen 31 geschoben, bis der Kopf 32 des Pumpenstutzens 31 in das Sackloch 33 im Verschlusselement 7 eingeführt und am Boden des Sacklochs 33 anliegt. Dabei wird das Verschlusselement 7 noch nicht aus der Durchgangsöffnung 5 herausgedrückt, so dass das Ventil 1 mittels der zweiten Dichtlippe 15 noch verschlossen bleibt. Anschliessend werden der Beutel und das Ventil 1 mit leicht erhöhtem Kraftaufwand weiter auf den Pumpenstutzen 31 aufgeschoben, so dass das Verschlusselement 7 teilweise aus der Durchgangsöffnung 5 des Ventilkörpers 2 gedrückt wird. Die zweite Dichtlippe 15 verliert ihre Funktion. Die erste Dichtlippe 8 dichtet aber weiterhin die Durchgangsöffnung 5 ab.

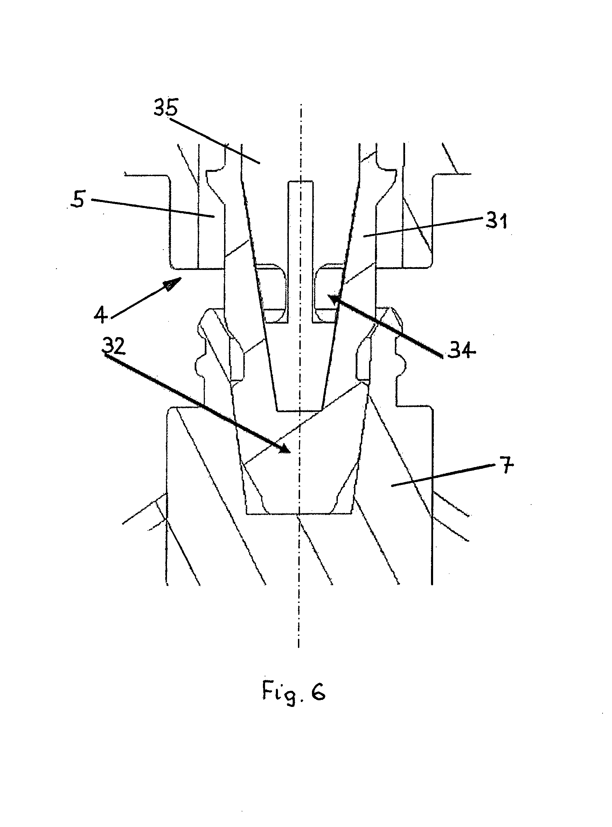

Durch weiteres Aufschieben des Ventils 1 auf den Pumpenstutzen 31 wird das Verschlusselement 7 koaxial gegen die Federkraft des Federelements 10 soweit von der Unterseite 4 des Ventilkörpers 2 weggedrückt bis die seitlichen Öffnungen 34 des Pumpenstutzens 31 über die Unterseite 4 im Bereich der Durchgangsöffnung 5 des Ventilkörpers 2 vorstehen. Das Ventil 1 ist dann vollständig geöffnet. Die Flüssigkeit kann dann durch die seitlichen Öffnungen 34 und eine Zentralbohrung 35 im Pumpenstutzen 31 aus dem Beutel 24 abgepumpt werden (Fig. 6).

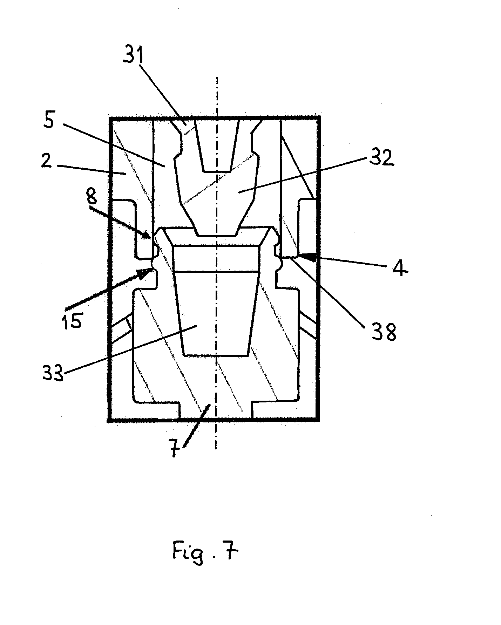

Wird der Beutel 24 wieder vom Pumpenstutzen 31 getrennt, soll das Ventil 1 wieder so fest schliessen, dass keine Flüssigkeit aus dem Beutel 24 über die Pumpeneinheit läuft. Beim Entfernen des Beutels 24 vom Pumpenstutzen 31 wird der Kopf 32 des Pumpenstutzens 31 aus dem Sackloch 33 im Verschlusselement 7 axial herausgeführt und das Verschlusselement 7 durch das Federelement 10 in die Durchgangsöffnung 5 des Ventilkörpers 2 gedrückt. Dabei wird nur die erste Dichtlippe 8 mit der leichteren Presspassung P1 in die Durchgangsöffnung 5 eingedrückt während die zweite Dichtlippe 15 auf der Unterseite 4 des Ventilkörpers 2 an der Schulter 38 anliegt, die an der Mündung der Durchgangsöffnung 5 gebildet wird. Das Ventil 1 ist in dieser zweiten Position des Verschlusselementes 7 nicht mehr so fest verschlossen wie in der ersten Position des Verschlusselementes 7, wenn die erste und zweite Dichtlippe 8;15 in die Durchgangsöffnung 5 eingeführt sind. Das Ventil 1 schliesst jedoch in dieser zweiten Position des Verschlusselementes 7 den Beutel 24 noch flüssigkeitsdicht ab (Fig. 7).

Obwohl die vorliegende Erfindung und ihre Vorteile im Detail beschrieben wurden, ist zu verstehen, dass zahlreiche Änderungen, Substitutionen und Veränderungen vorgenommen werden können, ohne vom Schutzbereich der Erfindung wie in den angehängten Patentansprüchen definiert abzuweichen.

## Patentansprüche

1. Ventil (1) zum Öffnen und Verschliessen eines Flüssigkeitsbehälters oder Beutels (24) umfassend:
A) einen Ventilkörper (2) mit einer Zentralachse (6), einer quer zur Zentralachse (6) angeordneten Oberseite (3), einer ebenfalls quer zur Zentralachse (6) angeordneten Unterseite (4) und einer den Ventilkörper (2) koaxial von der Oberseite (3) zur Unterseite (4) durchdringenden Durchgangsöffnung (5); und
B) ein Verschlusselement (7) mit einem gegen die Durchgangsöffnung (5) gerichteten vorderen Ende (11) und einem axial entgegengesetzten hinteren Ende (12), welches koaxial zur Zentralachse (6) von der Unterseite (4) her in die Durchgangsöffnung (5) einpressbar ist, so dass die Durchgangsöffnung (5) durch das Verschlusselement (7) flüssigkeitsdicht verschliessbar ist,
wobei
C) das Verschlusselement (7) mittels eines Federelements (10) in die Durchgangsöffnung (5) einpressbar ist; **dadurch gekennzeichnet, dass**
D) das Verschlusselement (7) am vorderen Ende (11) eine mit einer Presspassung P1 in die Durchgangsöffnung (5) einpressbare erste Dichtlippe (8) und axial dahinter eine mit einer Presspassung P2 in die Durchgangsöffnung (5) einpressbare zweite Dichtlippe (15) umfasst, wobei P2 eine stärkere Presspassung als P1 ist.

2. Ventil (1) nach Anspruch 1, **dadurch gekennzeichnet, dass** der Ventilkörper (2) ein Federhalteteil (9) umfasst, welches über die Unterseite (4) hinausragt und eine der Durchgangsöffnung (5) gegenüberliegend angeordnete Halterung (13) für das Federelement (10) aufweist.

3. Ventil (1) nach Anspruch 1 oder 2, **dadurch gekennzeichnet, dass** das Federelement (10) als Druckfeder ausgebildet ist.

4. Ventil (1) nach Anspruch 2 oder 3, **dadurch gekennzeichnet, dass** das Federelement (10) zwischen der Halterung (13) am Federhalteteil (9) und dem Verschlusselement (7) angeordnet ist, so dass das Verschlusselement (7) von der Unterseite (4) her in die Durchgangsöffnung (5) des Ventilkörpers (2) gedrückt wird.

5. Ventil (1) nach einem der Ansprüche 2 bis 4, **dadurch gekennzeichnet, dass** das Federhalteteil (9) im Wesentlichen U-förmig ausgebildet ist und zwei fest mit dem Ventilkörper (2) verbundene Seitenarme (23a;23b) und ein fest mit den Seitenarmen (23a;23b) verbundenes stegförmiges Brückenteil (22) umfasst.

6. Ventil (1) nach einem der Ansprüche 1 bis 5, **dadurch gekennzeichnet, dass** das Verschlusselement (7) mittels einem oder mehreren mit dem Federhalteteil (9) oder mit dem Ventilkörper (2) verbundenen elastischen Armen (14a;14b) gehalten wird.

7. Ventil (1) nach einem der Ansprüche 2 bis 6, **dadurch gekennzeichnet, dass** der Ventilkörper (2), das Federhalteteil (9) und das Verschlusselement (7) und vorzugsweise die elastischen Arme einstückig hergestellt sind.

8. Ventil (1) nach einem der Ansprüche 5 bis 7, **dadurch gekennzeichnet, dass** die Halterung (13) für das Federelement (10) als Hohlraum (20) ausgebildet ist, welcher das Brückenteil (22) koaxial zur Zentralachse (6) des Ventilkörpers (2) durchdringt und Mittel zum axialen Halten des Federelementes (10) umfasst.

9. Ventil (1) nach Anspruch 8, **dadurch gekennzeichnet, dass** das Brückenteil (22) eine endständige Aussenfläche (25) hat und dass auf dieser Aussenfläche (25) mindestens zwei zur Zentralachse (6) im Wesentlichen parallele Fortsätze (26) angeordnet sind, durch die sich der Hohlraum (20) erstreckt.

10. Ventil (1) nach einem der Ansprüche 1 bis 9, **dadurch gekennzeichnet, dass** der Ventilkörper (2) als Hohlzylinder ausgebildet ist und vorzugsweise eine oder mehrere im Wesentlichen rautenförmige Lamellen (18a;18b;18c) umfasst, welche sich quer zur Zentralachse (6) des Ventilkörpers (2) erstrecken.

11. Ventil (1) nach Anspruch 10, **dadurch gekennzeichnet, dass** zwischen den Lamellen (18a;18b;18c) eine erste Verstärkungsrippe (19a) und vorzugsweise aussen am Federhalteteil (9) eine zweite Verstärkungsrippe (19b) angeordnet ist.

12. Ventil (1) nach einem der Ansprüche 1 bis 11, **dadurch gekennzeichnet, dass** das Federelement (10) ein separates Teil ist.

13. Flüssigkeitsbehälter umfassend einen Beutel (24) mit einem Ventil (1) nach einem der Ansprüche 1 bis 12.

14. Flüssigkeitsbehälter nach Anspruch 13, **dadurch gekennzeichnet, dass** der Beutel (24) am Rand verschweissbar ist und der Ventilkörper (2) in den verschweissbaren Rand eines Beutels (24) eingeschweisst ist und dass der Rand des Beutels (24) bis auf einen Randabschnitt (30) verschweisst ist, so dass zum Abfüllen des Beutels (24) eine Öffnung am Beutel (24) gebildet wird.

## Claims

1. Valve (1) for opening and closing a liquid vessel or pouch (24), comprising:
A) a valve body (2) having a central axis (6), a top side (3) situated transversely with respect to the central axis (6), and a bottom side (4) likewise situated transversely with respect to the central axis (6), and having a passage opening (5) which passes through the valve body (2), coaxially from the top side (3) to the bottom side (4); and
B) a closure element (7) having a front end (11) which faces the passage opening (5) and having an axially opposite rear end (12), the closure element being pressable from the underside (4) into the passage opening (5) coaxially with respect to the central axis (6), so that the passage opening (5) is closable in a liquid-tight manner by the closure element (7), wherein
C) the closure element (7) is pressable into the passage opening (5) by means of a spring element (10); **characterized in that**
D) on the front end (11) the closure element (7) includes a first sealing lip (8) which is pressable into the passage opening (5) with a press fit P1, and a second sealing lip (15), axially behind the first sealing lip, which is pressable into the passage opening (5) with a press fit P2, wherein P2 is a more intense press fit than P1.

2. Valve (1) according to Claim 1, **characterized in that** the valve body (2) includes a spring retaining part (9) which protrudes beyond the bottom side (4) and which has a holder (13), situated opposite from the passage opening (5), for the spring element (10).

3. Valve (1) according to Claim 1 or 2, **characterized in that** the spring element (10) is designed as a compression spring.

4. Valve (1) according to Claim 2 or 3, **characterized in that** the spring element (10) is situated between the holder (13) on the spring retaining part (9) and the closure element (7), so that the closure element (7) is pressed from the bottom side (4) into the passage opening (5) of the valve body (2).

5. Valve (1) according to one of Claims 2 through 4, **characterized in that** the spring retaining part (9) is essentially U-shaped, and includes two side arms (23a; 23b) which are fixedly connected to the valve body (2), and a web-shaped bridge part (22) which is fixedly connected to the side arms (23a; 23b).

6. Valve (1) according to one of Claims 1 through 5, **characterized in that** the closure element (7) is held by means of one or multiple elastic arms (14a; 14b) which is/are connected to the spring retaining part (9) or to the valve body (2).

7. Valve (1) according to one of Claims 2 through 6, **characterized in that** the valve body (2), the spring retaining part (9), the closure element (7), and preferably the elastic arms are produced as one piece.

8. Valve (1) according to one of Claims 5 through 7, **characterized in that** the holder (13) for the spring element (10) is designed as a cavity (20) which passes through the bridge part (22) coaxially with respect to the central axis (6) of the valve body (2), and includes means for axially retaining the spring element (10).

9. Valve (1) according to Claim 8, **characterized in that** the bridge part (22) has an outer surface (25) at the end position, and that at least two projections (26) which are essentially parallel to the central axis (6) and through which the cavity (20) extends are situated on this outer surface (25).

10. Valve (1) according to one of Claims 1 through 9, **characterized in that** the valve body (2) is designed as a hollow cylinder and preferably includes one or multiple essentially rhomboidal plates (18a; 18b; 18c) which extend transversely with respect to the central axis (6) of the valve body (2).

11. Valve (1) according to Claim 10, **characterized in that** a first reinforcing rib (19a), and a second reinforcing rib (19b) preferably located on the outside of the spring retaining part (9), are situated between the plates (18a; 18b; 18c).

12. Valve (1) according to one of Claims 1 through 11, **characterized in that** the spring element (10) is a separate part.

13. Liquid vessel which includes a pouch (24) having a valve (1) according to one of Claims 1 through 12.

14. Liquid vessel according to Claim 13, **characterized in that** the pouch (24) is weldable to the edge, and the valve body (2) is welded into the weldable edge of a pouch (24), and that the edge of the pouch (24) is welded up to an edge section (30), so that an opening is formed at the pouch (24) for filling the pouch (24).

## Revendications

1. Vanne (1) destinée à ouvrir et fermer un récipient de fluide ou une poche de liquide (24), ladite vanne comprenant :
A) un corps de vanne (2) possédant un axe central (6), un côté supérieur (3) disposé transversalement à l'axe central (6), un côté inférieur (4) disposé également transversalement à l'axe central (6) et un orifice de passage (5) traversant le corps de vanne (2) coaxialement du côté supérieur (3) au côté inférieur (4) ; et
B) un élément de fermeture (7) possédant une extrémité avant (11) dirigée vers l'orifice de passage (5) et une extrémité arrière (12) axialement opposée qui peut être pressée coaxialement à l'axe central (6) depuis le côté inférieur (4) jusque dans l'orifice de passage (5) de sorte que l'orifice de passage (5) peut être fermé par l'élément de fermeture (7) de manière étanche au liquide,
C) l'élément de fermeture (7) pouvant être pressé au moyen d'un ressort (10) dans l'orifice de passage (5) ; **caractérisée en ce que**
D) l'élément de fermeture (7) comporte à l'extrémité avant (11) une première lèvre d'étanchéité (8) pouvant être pressée avec un ajustement serré P1 dans l'orifice de passage (5) et axialement en arrière une seconde lèvre d'étanchéité (15) pouvant être pressée avec un ajustement serré P2 dans l'orifice de passage (5), P2 étant un ajustement serré supérieur à P1.

2. Vanne (1) selon la revendication 1, **caractérisée en ce que** le corps de vanne (2) comprend une partie de retenue de ressort (9) qui fait saillie du côté inférieur (4) et un support (13) disposé à l'opposé de l'orifice de passage (5) et destiné au ressort (10).

3. Vanne (1) selon la revendication 1 ou 2, **caractérisée en ce que** le ressort (10) est configuré en ressort de compression.

4. Vanne (1) selon la revendication 2 ou 3, **caractérisée en ce que** le ressort (10) est disposé entre le support (13) au niveau de la partie de retenue de ressort (9} et l'élément de fermeture (7) de sorte que l'élément de fermeture (7) est pressé depuis le côté inférieur (4) dans l'orifice de passage (5) du corps de vanne (2).

5. Vanne (1} selon l'une quelconque des revendications 2 à 4, **caractérisée en ce que** la partie de retenue de ressort (9) a sensiblement une configuration en U et possède deux bras latéraux (23a ; 23b) raccordés solidairement au corps de vanne (2) et une partie de pontage (22) en forme de nervure raccordée solidairement aux bras latéraux (23a ; 23b).

6. Vanne (1) selon l'une quelconque des revendications 1 à 5, **caractérisée en ce que** l'élément de fermeture (7) est maintenu au moyen d'un ou de plusieurs bras élastiques (14a ; 14b) raccordés à l'élément de retenue de ressort (9) ou au corps de vanne (2).

7. Vanne (1) selon l'une quelconque des revendications 2 à 6, **caractérisée en ce que** le corps de vanne (2), l'élément de retenue de ressort (9) et l'élément de fermeture (7) et de préférence les bras élastiques sont formés d'une seule pièce.

8. Vanne (1) selon l'une quelconque des revendications 5 à 7, **caractérisée en ce que** le support (13) destiné au ressort (10) est configuré en cavité (20) qui traverse la partie de pontage (22) coaxialement à l'axe central (6) du corps de vanne (2) et qui comporte des moyens de retenue axial du ressort (10).

9. Vanne (1) selon la revendication 8, **caractérisée en ce que** la partie de pontage (22) comporte une face d'extrémité extérieure (25) et **en ce que** sur ladite face extérieure (25) sont disposés au moins deux prolongements (26), sensiblement parallèles à l'axe central (6), à travers lesquels s'étend la cavité (20).

10. Vanne (1) selon l'une quelconque des revendications 1 à 9, **caractérisée en ce que** le corps de vanne (2) est configurée en cylindre creux et comporte de préférence une ou plusieurs lamelles (18a ; 18b ; 18c), sensiblement en forme de losange, qui s'étendent transversalement à l'axe central (6) du corps de vanne (2).

11. Vanne (1) selon la revendication 10, **caractérisée en ce qu'**une première nervure de renforcement (19a) est disposée entre les lamelles (18a ; 18b; 18c), et de préférence une seconde nervure de renfort (19b) est disposée à l'extérieur au niveau de la partie de retenue de ressort (9).

12. Vanne (1) selon l'une quelconque des revendications 1 à 11, **caractérisée en ce que** le ressort (10) est une pièce séparée.

13. Réservoir de liquide comprenant une poche (24) munie d'une vanne (1) selon l'une quelconque des revendications 1 à 12.

14. Réservoir de liquide selon la revendication 13, **caractérisée en ce que** la poche (24) peut être soudée au bord et le corps de vanne (2) est soudé dans le bord soudable d'une poche (24) et **en ce que** le bord de la poche (24) es soudée à une partie formant bord (30) de sorte qu'un orifice est ménagé au niveau de la poche (24) afin de pouvoir remplir la poche (24).
